# EUROPEAN PATENT SPECIFICATION

(11) **EP 2 444 977 B1**
(45) Date of publication and mention of the grant of the patent: **08.07.2015**
(21) Application number: 11186521.8
(22) Date of filing: 25.10.2011
(51) Int. Cl.: G21C 17/104

(54) **Device for measuring temperature coefficient of moderator and method for measuring temperature coefficient of moderator**
Vorrichtung zum Messen des Temperaturkoeffizienten eines Moderators und Verfahren zur Messung des Temperaturkoeffizienten eines Moderators
Dispositif de mesure du coefficient de température d'un modérateur et procédé de mesure du coefficient de température du modérateur

(30) Priority: 25.10.2010 JP 2010239019
(43) Date of publication of application: 25.04.2012
(73) Proprietor: Mitsubishi Heavy Industries, Ltd., Tokyo 108-8215 (JP)
(72) Inventor: Sato, Daisuke, Tokyo 108-8215 (JP); Matsumoto, Hideki, Tokyo 108-8215 (JP)
(74) Representative: Intès, Didier Gérard André

(56) References cited:
- EP-A1- 0 097 488
- JP-A- 6 259 899
- RU-C1- 2 136 062

## Description

### Field

The present invention relates to a moderator temperature coefficient measuring device and a moderator temperature coefficient measuring method for measuring the temperature coefficient of a moderator flowing through a nuclear reactor.

### Background

Devices for measuring the temperature coefficient of a moderator have been known which acquire the time-series data of a reactivity signal and a coolant temperature noise signal (a coolant temperature signal) and then after decomposing each signal into a plurality of components, calculate the temperature coefficient of the moderator from the correlation between the two signals using the Fourier transform or the like (for example, see Patent Literature 1).
Other examples of devices for measuring a temperature coefficient of a moderator can be found in Patent Literature 2 and Patent Literature 3.

### Citation List

### Patent Literature

Patent Literature 1: Japanese Patent Application Laid-Open No. 2008-45972.
Patent Literature 2: Russian patent RU 2136062.
Patent Literature 3: Japanese patent JP 6259899.

### Summary

### Technical Problem

However, for the conventional moderator temperature coefficient measuring device, noise signals from a nuclear reactor to be measured contain various types of noise components. Since this makes it difficult to extract a valid component from the noise signal, the moderator temperature coefficient measuring device may find, but with difficulty, a good correlation between the reactivity and the coolant temperature.

It is therefore an object of the present invention to provide a moderator temperature coefficient measuring device and a moderator temperature coefficient measuring method for measuring the temperature coefficient of a moderator in a preferred manner.

According to an aspect of the present invention, a device for measuring a temperature coefficient of a moderator is provided according to the subject-matter of claim 1.

According to another aspect of the present invention, a method for measuring a temperature coefficient of a moderator is provided according to the subject-matter of claim 3.

### Brief Description of Drawings

Fig. 1 is a block diagram schematically illustrating a nuclear facility which includes a device for measuring the temperature coefficient of a nuclear reactor coolant.
Fig. 2 is a flowchart showing a method for measuring the temperature coefficient of a nuclear reactor coolant.
Fig. 3 is a graph showing variations with time in the thermal power from a nuclear reactor and the average temperature of a nuclear reactor coolant before and after a control rod is inserted.

### Description of Embodiment

Now, with reference to the accompanying drawings, a description will be made to a device for measuring the temperature coefficient of a moderator and a method for measuring the temperature coefficient of a moderator according to the present invention. Note that the invention will not be limited by the following embodiment. Furthermore, the components of the following embodiment may include those that are replaceable and can be easily replaced by those skilled in the art or substantially identical ones.

### [Embodiment]

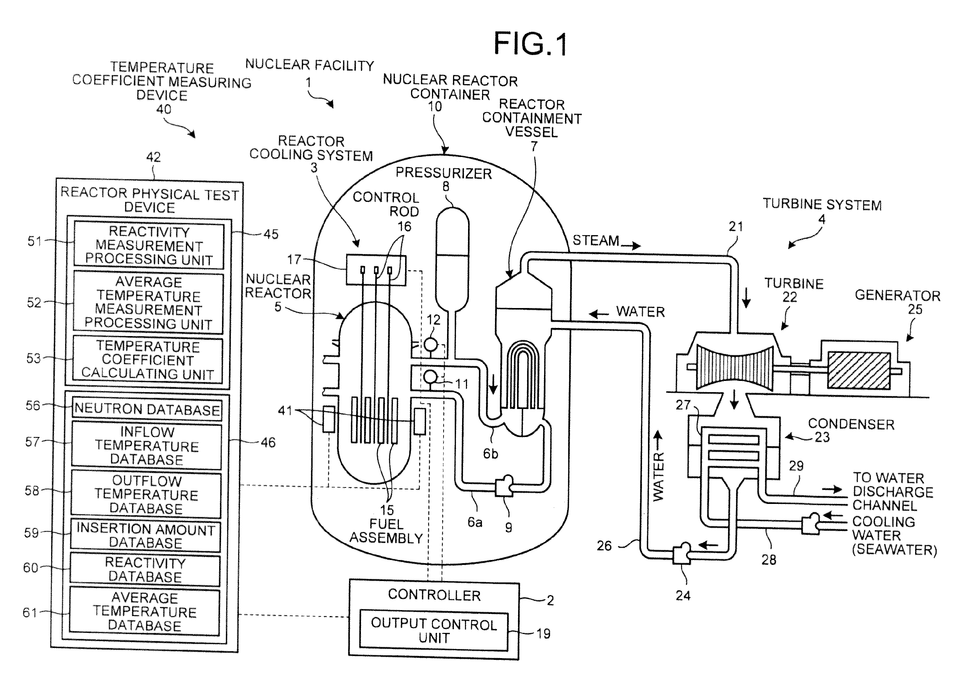

Fig. 1 is a block diagram schematically illustrating a nuclear facility which includes a device for measuring the temperature coefficient of a nuclear reactor coolant. A device 40 for measuring the temperature coefficient of a moderator according to this embodiment is configured to measure the temperature coefficient of a moderator (nuclear reactor coolant) that flows through a nuclear reactor 5. For example, as used herein, the nuclear reactor 5 is a pressurized water reactor (PWR). The pressurized water reactor 5 may be employed in a nuclear facility 1 which is made up of a reactor cooling system 3 including the nuclear reactor 5; a turbine system 4 for exchanging heat with the reactor cooling system 3; and a controller 2 for controlling these systems. The reactor cooling system 3 allows a reactor coolant to flow therethrough, while the turbine system 4 allows a secondary coolant to flow therethrough.

The reactor cooling system 3 has the nuclear reactor 5 and a steam generator 7 connected to the nuclear reactor 5 via a cold leg 6a and a hot leg 6b. Furthermore, the hot leg 6b is provided thereon with a pressurizer 8, while the cold leg 6a is provided thereon with a reactor coolant pump 9. Furthermore, the nuclear reactor 5, the cold leg 6a, the hot leg 6b, the steam generator 7, the pressurizer 8, and the reactor coolant pump 9 are accommodated in a reactor containment vessel 10.

The cold leg 6a is provided with an inflow temperature sensor 11 for detecting the inflow temperature of the reactor coolant flowing into the nuclear reactor 5, while the hot leg 6b is provided with an outflow temperature sensor 12 for detecting the outflow temperature of the reactor coolant flowing out of the nuclear reactor 5. The inflow temperature sensor 11 and the outflow temperature sensor 12 are connected to the controller 2, so that the controller 2 acquires the inflow temperature and the outflow temperature. As will be described in more detail later, the inflow temperature sensor 11 and the outflow temperature sensor 12 constitute a part of a temperature coefficient measuring device 40.

As mentioned above, the nuclear reactor 5 is a pressurized water reactor in which a reactor coolant is filled. Furthermore, the nuclear reactor 5 accommodates a number of fuel assemblies 15 and is provided with a number of control rods 16, which control the nuclear fission in the fuel assemblies 15, so as to be inserted into the respective fuel assemblies 15. The control rod 16 is driven by a control rod driving device 17 so as to be inserted into the fuel assembly 15. The control rod 16 inserted by the control rod driving device 17 into the fuel assembly 15 causes a decrease in the nuclear fission reactivity of the fuel assembly 15 and a drop in the thermal power from the nuclear reactor.

When the fuel assembly 15 undergoes nuclear fission while the nuclear fission reaction is being controlled by the control rod 16, this nuclear fission produces heat energy. The produced heat energy heats the reactor coolant, and the heated reactor coolant is fed to the steam generator 7 through the hot leg 6b. On the other hand, the reactor coolant fed from each steam generator 7 through the cold leg 6a flows into the nuclear reactor 5 to cool the nuclear reactor 5.

The pressurizer 8 provided to the hot leg 6b pressurizes the reactor coolant raised to a high temperature, thereby preventing the reactor coolant from being boiled. Furthermore, the steam generator 7 allows the reactor coolant raised to a high temperature and a high pressure to exchange heat with the secondary coolant, thereby vaporizing the secondary coolant to produce steam and cooling the high-temperature, high-pressure reactor coolant. Each reactor coolant pump 9 circulates the reactor coolant through the reactor cooling system 3 so as to feed the reactor coolant from each steam generator 7 to the nuclear reactor 5 via the cold leg 6a as well as to feed the reactor coolant to each steam generator 7 from the nuclear reactor 5 via the hot leg 6b.

A description will next be made to the series of operations of the reactor cooling system 3 in the nuclear facility 1. When the heat energy produced by nuclear fission reaction in the nuclear reactor 5 heats the reactor coolant, the heated reactor coolant is fed by each reactor coolant pump 9 to each steam generator 7 through the hot leg 6b. The high-temperature reactor coolant passing through the hot leg 6b is pressurized by the pressurizer 8 to be thereby prevented from boiling, thus allowed to flow into each steam generator 7 at a high temperature and high pressure. The high-temperature high-pressure reactor coolant that has flown into each steam generator 7 is cooled by exchanging heat with the secondary coolant. Then, the cooled reactor coolant is fed by each reactor coolant pump 9 to the nuclear reactor 5 via the cold leg 6a. Then, the cooled reactor coolant flowing into the nuclear reactor 5 cools the nuclear reactor 5. That is, the reactor coolant circulates between the nuclear reactor 5 and the steam generator 7. Note that the reactor coolant is the light water in which boron used as the neutron absorber is dissolved.

The turbine system 4 has a turbine 22 connected to each steam generator 7 via a steam pipe 21; a condenser 23 connected to the turbine 22; and a feed pump 24 provided at a halfway point on a feed pipe 26 that connects between the condenser 23 and each steam generator 7. Then, the aforementioned turbine 22 is connected with a generator 25.

Now, a description will be made to the series of operations of the turbine system 4 in the nuclear facility 1. The steam flowing into the turbine 22 from each steam generator 7 via the steam pipe 21 rotates the turbine 22. Rotating the turbine 22 causes the generator 25 connected to the turbine 22 to generate electricity. Subsequently, the steam that has flown out of the turbine 22 flows into the condenser 23. The condenser 23 is provided therein with a cooling pipe 27 in a manner such that the cooling pipe 27 is connected at one end with a water intake pipe 28 for supplying cooling water (for example, seawater) while the cooling pipe 27 is connected at the other end with a drain pipe 29 for draining the cooling water. The condenser 23 then allows the steam that has flown therein from the turbine 22 to be cooled in the cooling pipe 27, thereby turning the steam back to liquid. The liquidized secondary coolant is fed by the feed pump 24 to each steam generator 7 via the feed pipe 26. The secondary coolant fed to each steam generator 7 exchanges heat with the reactor coolant in each steam generator 7, thereby being changed back to steam.

The controller 2 is provided with an power control unit (power control means) 19 for maintaining constant thermal power from the nuclear reactor 5. The power control unit 19 provides control in a manner such that a constant heat quantity is given from the reactor coolant to the secondary coolant in the steam generator 7. Accordingly, when the outflow temperature of the reactor coolant flowing out of the nuclear reactor 5 is increased, the power control unit 19 increases the inflow temperature of the reactor coolant that flows out of the steam generator 7 and then flows into the nuclear reactor 5. On the other hand, when the outflow temperature of the reactor coolant flowing out of the nuclear reactor 5 is decreased, the power control unit 19 reduces the inflow temperature of the reactor coolant that flows out of the steam generator 7 and then flows into the nuclear reactor 5.

Now, to measure the temperature coefficient of the reactor coolant through the nuclear reactor 5 in the nuclear facility 1 that is configured as described above, the temperature coefficient measuring device 40 is used to measure the temperature coefficient of the reactor coolant. The temperature coefficient measuring device 40 includes the aforementioned control rod driving device (control rod driving means) 17, the aforementioned inflow temperature sensor (inflow temperature sensing means) 11, the aforementioned outflow temperature sensor (outflow temperature sensing means) 12, a neutron detector 41 (neutron detecting means), and a reactor physical test device (reactor physical test means) 42.

The neutron detector 41, which is what is called an NIS (Nuclear Instrumentation System), is provided in plurality around the nuclear reactor 5 and connected to the reactor physical test device 42. The plurality of neutron detectors 41 capture neutrons emitted from the nuclear reactor 5, and then output the time-series data of the captured neutrons to the reactor physical test device 42.

The reactor physical test device 42 includes a computer and is connected to each of the neutron detector 41 and the controller 2. The reactor physical test device 42, which has a processing unit 45 and a storage unit 46, measures the reactivity of the nuclear reactor 5 based on the data input from the neutron detectors 41 and measures the average temperature of the reactor coolant based on the data input from the controller 2.

The storage unit 46 has a neutron database 56 for storing the time-series data of neutron supplied from the neutron detectors 41, an inflow temperature database 57 for storing the time-series data of inflow temperature supplied from the inflow temperature sensor 11, and an outflow temperature database 58 for storing the time-series data of outflow temperature supplied from the outflow temperature sensor 12. Furthermore, the storage unit 46 has an insertion amount database 59 for storing the amount of insertion of the control rod 16 that has been inserted by the control rod driving device 17 into the fuel assembly 15. Furthermore, the storage unit 46 has a reactivity database 60 for storing the time-series data of the reactivity of the nuclear reactor 5 that has been derived by a reactivity measurement processing unit 51; and an average temperature database 61 for storing the time-series data of average temperature that has been derived by an average temperature measurement processing unit 52.

The processing unit 45 includes the reactivity measurement processing unit (reactivity measuring means) 51, the average temperature measurement processing unit (average temperature measuring means) 52, and a temperature coefficient calculating unit (temperature coefficient calculating means) 53.

The reactivity measurement processing unit 51 retrieves the time-series data of neutron stored in the neutron database 56 and then calculates the reactivity of the nuclear reactor 5 from the retrieved time-series data of neutron according to a predetermined calculation program. Then, the reactivity measurement processing unit 51 stores the calculated time-series data of reactivity in the reactivity database 60.

The average temperature measurement processing unit 52 retrieves the time-series data of inflow temperature stored in the inflow temperature database 57 and the time-series data of outflow temperature stored in the outflow temperature database 58 to calculate an average temperature based on the retrieved inflow and outflow temperatures. The average temperature is calculated by adding the inflow temperature and the outflow temperature and then dividing the result of the addition by two. Then, the average temperature measurement processing unit 52 stores the time-series data of calculated average temperature in the average temperature database 61.

The temperature coefficient calculating unit 53 calculates the temperature coefficient α of the reactor coolant based on the amount of change Δρ in the reactivity of the nuclear reactor 5 stored in the reactivity database 60 and the amount of change ΔT in the average temperature stored in the average temperature database 61. This temperature coefficient α is a coefficient representative of the proportional relation between the amount of change Δρ in the reactivity of the nuclear reactor 5 and the amount of change ΔT in the average temperature, and is expressed by equation "Δρ = α·ΔT". Accordingly, the temperature coefficient α is calculated by dividing the amount of change Δρ in the reactivity of the nuclear reactor 5 by the amount of change ΔT in the average temperature. Furthermore, the temperature coefficient α is a negative value as α < 0. Thus, the nuclear reactor 5 is given a negative reactivity when the average temperature of the reactor coolant is increased (in the case of the amount of change being plus), whereas the nuclear reactor 5 is given a positive reactivity when the average temperature of the reactor coolant is decreased (the amount of change being minus).

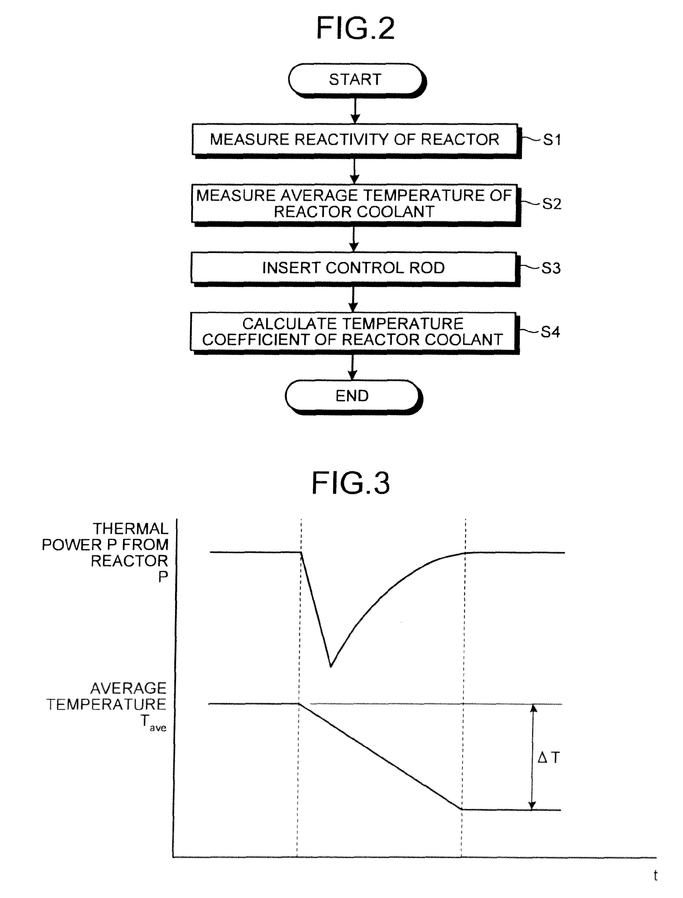

Now, with reference to Figs. 2 and 3, a description will be made to a temperature coefficient measuring method for measuring the temperature coefficient of the reactor coolant using the temperature coefficient measuring device 40 configured as described above. Fig. 2 is a flowchart showing the method for measuring the temperature coefficient of the reactor coolant. Fig. 3 is a graph showing variations with time in the thermal power from the nuclear reactor and the average temperature of the reactor coolant before and after the control rod is inserted. The method for measuring the temperature coefficient of the reactor coolant executes the following steps in sequence: the reactivity measurement step S1 for measuring the reactivity of the nuclear reactor 5; the average temperature measurement step S2 for measuring the average temperature of the reactor coolant; the control rod insertion step S3 for inserting the control rod 16; and the temperature coefficient calculation step S4 for calculating the temperature coefficient of the reactor coolant.

In the reactivity measurement step S1, the reactivity measurement processing unit 51 measures the reactivity of the nuclear reactor 5 at a predetermined cycle as time-series data. That is, in the reactivity measurement step S1, to measure the reactivity of the nuclear reactor 5 in real time, the reactivity of the nuclear reactor 5 is measured before and after the control rod insertion step S3. Accordingly, the first reactivity measurement step of measuring the reactivity of the nuclear reactor 5 before the insertion of the control rod 16 and the second reactivity measurement step of measuring the reactivity of the nuclear reactor 5 after the insertion of the control rod 16 are to be executed successively in terms of time.

In the average temperature measurement step S2, the average temperature measurement processing unit 52 measures the average temperature of the reactor coolant at a predetermined cycle as time-series data. That is, in the average temperature measurement step S2, to measure the average temperature of the reactor coolant in real time, the average temperature of the reactor coolant is measured before and after the control rod insertion step S3. Accordingly, the first average temperature measurement step of measuring the average temperature of the reactor coolant before the insertion of the control rod 16 and the second average temperature measurement step of measuring the average temperature of the reactor coolant after the insertion of the control rod 16 are to be executed successively in terms of time.

In the control rod insertion step S3, the control rod driving device 17 causes the control rod 16 to be inserted into the fuel assembly 15 by a predetermined amount of insertion. At this time, in the control rod insertion step S3, the control rod 16 is inserted by the predetermined amount of insertion at multiple times, and thus the amount of insertion of the control rod 16 per one time is a small amount.

As shown in Fig. 3, after the temperature coefficient measuring device 40 follows the control rod insertion step S3 to insert the control rod 16 into the fuel assembly 15, the control rod 16 absorbs neutrons flying within the fuel assembly 15. The absorption of neutrons reduces the nuclear reaction in the fuel assembly 15. Thus, the temperature coefficient measuring device 40 gives a negative reactivity to the nuclear reactor 5 by inserting the control rod 16 into the fuel assembly 15. Giving the negative reactivity to the nuclear reactor 5 causes a drop in thermal power P from the nuclear reactor 5. This reduces the heat quantity provided to the reactor coolant. Thus, the outflow temperature of the reactor coolant flowing out of the nuclear reactor 5 is reduced, thereby causing the average temperature Tₐᵥₑ of the reactor coolant to decrease.

Subsequently, the reactor coolant at a reduced outflow temperature flows into the steam generator 7. At this time, since the power control unit 19 of the controller 2 provides control to keep the thermal power P from the nuclear reactor 5 constant, the heat quantity to be given from the reactor coolant to the secondary coolant during heat exchange is constant. Accordingly, the inflow temperature of the reactor coolant flowing out of the steam generator 7 to flow into the nuclear reactor 5 is decreased, thereby causing the average temperature Tₐᵥₑ of the reactor coolant to be reduced.

When the reactor coolant at a reduced inflow temperature is flown into the nuclear reactor 5, since the nuclear reactor 5 has a negative isothermal temperature coefficient, a positive reactivity is added to the nuclear reactor 5, causing an increase in nuclear reaction in the fuel assembly 15. This allows the power control unit 19 of the controller 2 to reduce the inflow temperature of the reactor coolant flowing into the nuclear reactor 5, thereby giving a positive reactivity to the nuclear reactor 5. Then, the power control unit 19 of the controller 2 reduces the inflow temperature of the reactor coolant (the average temperature Tₐᵥₑ) until the positive reactivity is given which is equivalent to the negative reactivity provided by the insertion of the control rod 16.

When the negative reactivity given by inserting the control rod 16 is equivalent to the positive reactivity given by reducing the inflow temperature of the reactor coolant, the thermal power P from the nuclear reactor 5 becomes constant and the average temperature Tₐᵥₑ of the reactor coolant becomes constant as well.

In the temperature coefficient calculation step S4, the temperature coefficient calculating unit 53 retrieves, from the reactivity database 60, the reactivity of the nuclear reactor 5 before the insertion of the control rod 16 and the reactivity of the nuclear reactor 5 after the insertion of the control rod 16. Then, the temperature coefficient calculating unit 53 calculates the amount of change Δρ in reactivity between before and after the insertion of the control rod 16. Furthermore, the temperature coefficient calculating unit 53 retrieves the average temperature before the insertion of the control rod 16 with the nuclear reactor 5 delivering constant thermal power and the average temperature after the insertion of the control rod 16 with the nuclear reactor 5 delivering constant thermal power. Then, the temperature coefficient calculating unit 53 calculates the amount of change ΔT in average temperature between before and after the insertion of the control rod 16. After the amount of change Δρ in reactivity and the amount of change AT in average temperature are calculated, the temperature coefficient calculating unit 53 divides the amount of change Δρ in reactivity by the amount of change AT in average temperature, thereby calculating the temperature coefficient α of the reactor coolant.

According to the configuration described above, the temperature coefficient measuring device 40 and the temperature coefficient measuring method make it possible to actually measure the reactivity of the nuclear reactor 5 as well as to actually measure the inflow and outflow temperatures of the reactor coolant. Accordingly, the temperature coefficient measuring device 40 and the temperature coefficient measuring method make it possible to calculate the average temperature of the reactor coolant from the actually measured inflow and outflow temperatures as well as to calculate the temperature coefficient of the reactor coolant based on the actual measurement in a preferred fashion. This allows for evaluating the calculated temperature coefficient of the reactor coolant as a value with high validity.

Furthermore, in the temperature coefficient measuring device 40, the reactor physical test device 42 has the reactivity measurement processing unit 51, the average temperature measurement processing unit 52, and the temperature coefficient calculating unit 53, whereby the temperature coefficient measuring device 40 can be configured in a simplified structure. In addition, only by connecting the reactor physical inspection device 42 to the controller 2 and the neutron detectors 41 and inserting the control rod 16, the temperature coefficient of the reactor coolant can be measured in a simplified manner.

Furthermore, in the temperature coefficient measuring device 40 and the temperature coefficient measuring method, the control rod 16 can be inserted by the predetermined amount of insertion at multiple times. The amount of insertion of the control rod 16 per one time can thus be reduced to a small amount. Thus, to measure the reactivity of the nuclear reactor 5 by the reactor physical inspection device 42, the reactivity of the nuclear reactor 5 per one time can be measured with accuracy because of the small amount of insertion of the control rod 16.

### Industrial Applicability

As described above, the moderator temperature coefficient measuring device according to the present invention is useful for the pressurized water nuclear reactor and particularly suitable for measuring the temperature coefficient of a nuclear reactor coolant by actual measurement.

### Reference Signs List

- 1: nuclear facility
- 2: controller
- 3: reactor cooling system
- 4: turbine system
- 5: nuclear reactor
- 6a: cold leg
- 6b: hot leg
- 7: steam generator
- 8: pressurizer
- 9: reactor coolant pump
- 11: inflow temperature sensor
- 12: outflow temperature sensor
- 15: fuel assembly
- 16: control rod
- 17: control rod driving device
- 19: power control unit
- 21: steam pipe
- 22: turbine
- 23: condenser
- 24: feed pump
- 25: generator
- 26: feed pipe
- 27: cooling pipe
- 28: water intake pipe
- 29: drain pipe
- 40: temperature coefficient measuring device
- 41: neutron detector
- 42: reactor physical test device
- 45: processing unit
- 46: storage unit
- 51: reactivity measurement processing unit
- 52: average temperature measurement processing unit
- 53: temperature coefficient calculating unit
- 56: neutron database
- 57: inflow temperature database
- 58: outflow temperature database
- 59: insertion amount database
- 60: reactivity database
- 61: average temperature database

## Claims

1. A device (40) arranged for measuring a temperature coefficient of a moderator which flows through a nuclear reactor (5) as a nuclear reactor coolant, wherein the reactor (5) is provided with a control rod driving unit (17) capable of inserting a control rod (16) into a fuel assembly (15) stored in a nuclear reactor (5), the device comprising:
a controller (2) including a power control unit (19) for providing control so that the nuclear reactor (5) delivers constant thermal power;
an inflow temperature sensing unit (11) connected to the controller (2) and configured to sense an inflow temperature of the moderator flowing into the nuclear reactor (5);
an outflow temperature sensing unit (12) connected to the controller (2) and configured to sense an outflow temperature of the moderator flowing out of the nuclear reactor (5);
a neutron detecting unit (41) configured to detect a neutron in the nuclear reactor (5);
a reactor physical test unit (42) connected to the neutron detecting unit (41) and configured to measure the reactivity based on the detected neutrons,
the reactor physical test unit (42) further comprising a processing unit (45) that comprises a reactivity measuring unit (51) configured to measure a reactivity of the nuclear reactor (5);
an average temperature measuring unit (52) configured to measure an average temperature from the sensed inflow and outflow temperatures; and
a temperature coefficient calculating unit (53) configured to calculate a temperature coefficient of the moderator based on an amount of change in the reactivity between before and after the control rod (16) is inserted and on an amount of change in the average temperature between before and after the control rod (16) is inserted with the thermal power being constant.

2. The device for measuring a temperature coefficient of a moderator according to claim 1, wherein
the reactor physical test unit (42) further includes a storage unit (46), and is configured to acquire the inflow temperature and the outflow temperature to calculate the average temperature based on the inflow temperature and the outflow temperature and to store a time-series data of the average temperature calculated in an average temperature database (61) in the storage unit (46).

3. A method for measuring a temperature coefficient of a moderator which flows into a nuclear reactor (5) that stores a fuel assembly (15) into which a control rod (16) is inserted, the method comprising:
a first reactivity measurement step of measuring a reactivity of the nuclear reactor (5) before the control rod (16) is inserted;
a first average temperature measurement step of measuring an average temperature derived from an inflow temperature of the moderator flowing into the nuclear reactor (5) and an outflow temperature of the moderator flowing out of the nuclear reactor (5), the first average temperature measurement step being carried out with the nuclear reactor (5) delivering constant thermal power before the control rod (16) is inserted;
a control rod insertion step of inserting the control rod (16);
a second reactivity measurement step of measuring a reactivity of the nuclear reactor (5) after the control rod (16) is inserted;
a second average temperature measurement step of measuring the average temperature after the control rod (16) is inserted, with the nuclear reactor (5) delivering the constant thermal power; and
a temperature coefficient calculation step of calculating a temperature coefficient of the moderator based on an amount of change in the reactivity between the first reactivity measurement step and the second reactivity measurement step and an amount of change in the average temperature between the first average temperature measurement step and the second average temperature measurement step.

## Patentansprüche

1. Vorrichtung (40), die dazu ausgelegt ist, einen Temperaturkoeffizienten eines Moderators zu messen, der als ein Kernreaktorkühlmittel durch einen Kernreaktor (5) fließt, wobei der Reaktor (5) mit einer Steuerstabantriebseinheit (17) ausgestattet ist, die in der Lage ist, einen Steuerstab (16) in eine Brennstoffbaugruppe (15), die in einem Kernreaktor (5) gelagert wird, einzuführen, wobei die Vorrichtung umfasst:
einen Controller (2) mit einer Leistungssteuereinheit (19) zum Ausführen einer Steuerung dergestalt, dass der Kernreaktor (5) eine konstante Wärmeleistung ausgibt,
eine Zulauftemperatur- Erfassungseinheit (11), die mit dem Controller (2) verbunden ist und dazu konfiguriert ist, eine Zulauftemperatur des in den Kernreaktor (5) fließenden Moderators zu erfassen,
eine Ausströmtemperatur-Erfassungseinheit (12), die mit dem Controller (2) verbunden ist und dazu konfiguriert ist, eine Ausströmtemperatur des aus dem Kernreaktor (5) ausströmenden Moderators zu erfassen,
eine Neutronendetektiereinheit (41), die dazu konfiguriert ist, ein Neutron in dem Kernreaktor (5) zu detektieren,
eine Einheit zum Durchführen physikalischer Tests (42), die mit der Neutronendetektiereinheit (41) verbunden ist und dazu konfiguriert ist, die Reaktivität auf Basis der detektierten Neutronen zu messen,
wobei die Einheit zum Durchführen physikalischer Tests (42) ferner eine Verarbeitungseinheit (45) umfasst, die eine Reaktivitätsmesseinheit (51) umfasst, die dazu konfiguriert ist, eine Reaktivität des Kernreaktors (5) zu messen,
eine Durchschnittstemperaturmesseinheit (52), die dazu konfiguriert ist, anhand der erfassten Zulauf- und Ausströmtemperaturen eine Durchschnittstemperatur zu messen, und
eine Temperaturkoeffizient-Berechnungseinheit (53), die dazu konfiguriert ist, einen Temperaturkoeffizienten des Moderators auf Basis eines Betrages einer Änderung der Reaktivität zwischen, vor und nach dem Einführen des Steuerstabes (16) und auf Basis eines Betrages einer Änderung der Durchschnittstemperatur zwischen, vor und nach dem Einführen des Steuerstabes (16) zu berechnen, während die Wärmeleistung konstant ist.

2. Vorrichtung zum Messen eines Temperaturkoeffizienten eines Moderators nach Anspruch 1, wobei
die Einheit zum Durchführen physikalischer Tests (42) ferner eine Speichereinheit (46) enthält und dazu konfiguriert ist, die Zulauftemperatur und die Ausströmtemperatur zu erfassen, um die Durchschnittstemperatur auf Basis der Zulauftemperatur und der Ausströmtemperatur zu berechnen, und Zeitreihendaten der berechneten Durchschnittstemperatur in einer Durchschnittstemperatur-Datenbank (61) in der Speichereinheit (46) zu speichern.

3. Verfahren zum Messen eines Temperaturkoeffizienten eines Moderators, der in einen Kernreaktor (5) fließt, der eine Brennstoffbaugruppe (15) lagert, in die ein Steuerstab (16) eingeführt wird, wobei das Verfahren umfasst:
einen ersten Reaktivitätsmessungsschritt des Messens einer Reaktivität des Kernreaktors (5), bevor der Steuerstab (16) eingeführt wird,
einen ersten Durchschnittstemperaturmessungsschritt des Messens einer Durchschnittstemperatur, die aus einer Zulauftemperatur des in den Kernreaktor (5) einströmenden Moderators und einer Ausströmtemperatur des aus dem Kernreaktor (5) ausströmenden Moderators abgeleitet wird, wobei der erste Durchschnittstemperaturmessungsschritt ausgeführt wird, während der Kernreaktor (5) eine konstante Wärmeleistung ausgibt, bevor der Steuerstab (16) eingeführt wird,
einen Steuerstabeinführschritt des Einführens des Steuerstabes (16),
einen zweiten Reaktivitätmessungsschritt des Messens einer Reaktivität des Kernreaktors (5), nachdem der Steuerstab (16) eingeführt wurde,
einen zweiten Durchschnittstemperaturmessungsschritt des Messens der Durchschnittstemperatur, nachdem der Steuerstab (16) eingeführt wurde, während der Kernreaktor (5) die konstante Wärmeleistung ausgibt, und
einen Temperaturkoeffizienten-Berechnungsschritt des Berechnens eines Temperaturkoeffizienten des Moderators auf der Basis eines Betrages der Änderung der Reaktivität zwischen dem ersten Reaktivitätmessungsschritt und dem zweiten Reaktivitätmessungsschritt und eines Betrages der Änderung der Durchschnittstemperatur zwischen dem ersten Durchschnittstemperaturmessungsschritt und dem zweiten Durchschnittstemperaturmessungsschritt.

## Revendications

1. Dispositif (40) prévu pour mesurer un coefficient de température d'un modérateur qui s'écoule à travers un réacteur nucléaire (5) en tant qu'agent de refroidissement de réacteur nucléaire, dans lequel le réacteur (5) est pourvu d'une unité d'entraînement de barre de commande (17) capable d'insérer une barre de commande (16) dans un assemblage de combustible (15) stocké dans un réacteur nucléaire (5), le dispositif comportant :
un dispositif de commande (2) comprenant une unité de commande de puissance (19) destinée à procurer une commande de telle sorte que le réacteur nucléaire (5) délivre une puissance thermique constante ;
une unité de détection de température d'écoulement d'entrée (11) reliée au dispositif de commande (2) et configurée pour détecter une température d'écoulement d'entrée du modérateur s'écoulant dans le réacteur nucléaire (5) ;
une unité de détection de température d'écoulement de sortie (12) reliée au dispositif de commande (2) et configurée pour détecter une température d'écoulement de sortie du modérateur s'écoulant hors du réacteur nucléaire (5) ;
une unité de détection de neutron (41) configurée pour détecter un neutron dans le réacteur nucléaire (5) ;
une unité de test physique de réacteur (42) reliée à l'unité de détection de neutron (41) et configurée pour mesurer la réactivité sur la base des neutrons détectés,
l'unité de test physique de réacteur (42) comportant en outre une unité de traitement (45) qui comporte une unité de mesure de réactivité (51) configurée pour mesurer une réactivité du réacteur nucléaire (5) ;
une unité de mesure de température moyenne (52) configurée pour mesurer une température moyenne des températures d'écoulement d'entrée et de sortie détectées ; et
une unité de calcul de coefficient de température (53) configurée pour calculer un coefficient de température du modérateur sur la base d'une quantité de changement de la réactivité entre avant et après que la barre de commande (16) soit insérée et d'une quantité de changement de la température moyenne entre avant et après que la barre de commande (16) soit insérée avec la puissance thermique qui est constante.

2. Dispositif destiné à mesurer un coefficient de température d'un modérateur selon la revendication 1, dans lequel
l'unité de test physique de réacteur (42) comprend en outre une unité de stockage (46), et est configurée pour acquérir la température d'écoulement d'entrée et la température d'écoulement de sortie afin de calculer la température moyenne sur la base de la température d'écoulement d'entrée et de la température d'écoulement de sortie et pour stocker des données de série temporelle de la température moyenne calculée dans une base de données de température moyenne (61) dans l'unité de stockage (46).

3. Procédé de mesure d'un coefficient de température d'un modérateur qui s'écoule dans un réacteur nucléaire (5) qui stocke un assemblage de combustible (15) dans lequel une barre de commande (16) est insérée, le procédé comportant :
une première étape de mesure de réactivité destinée à mesurer une réactivité du réacteur nucléaire (5) avant que la barre de commande (16) soit insérée ;
une première étape de mesure de température moyenne destinée à mesurer une température moyenne obtenue à partir d'une température d'écoulement d'entrée du modérateur s'écoulant dans le réacteur nucléaire (5) et d'une température d'écoulement de sortie du modérateur s'écoulant hors du réacteur nucléaire (5), la première étape de mesure de température moyenne étant réalisée avec le réacteur nucléaire (5) qui délivre une puissance thermique constante avant que la barre de commande (16) soit insérée ;
une étape d'insertion de barre de commande destinée à insérer la barre de commande (16) ;
une deuxième étape de mesure de réactivité destinée à mesurer une réactivité du réacteur nucléaire (5) une fois que la barre de commande (16) est insérée ;
une deuxième étape de mesure de température moyenne destinée à mesurer la température moyenne une fois que la barre de commande (16) est insérée, avec le réacteur nucléaire (5) qui délivre la puissance thermique constante ; et
une étape de calcul de coefficient de température destinée à calculer un coefficient de température du modérateur sur la base d'une quantité de changement de la réactivité entre la première étape de mesure de réactivité et la deuxième étape de mesure de réactivité et d'une quantité de changement de la température moyenne entre la première étape de mesure de température moyenne et la deuxième étape de mesure de température moyenne.
